# EUROPEAN PATENT APPLICATION

(11) **EP 4 410 468 A1**
(43) Date of publication of application: **07.08.2024**
(21) Application number: 22875804.1
(22) Date of filing: 13.09.2022
(51) Int. Cl.: B23K 26/00, B23K 26/082

(54) **LASER MACHINING APPARATUS AND LASER MACHINING METHOD**

(30) Priority: 30.09.2021 JP 2021162119
(71) Applicant: BROTHER KOGYO KABUSHIKI KAISHA, Nagoya-shi, Aichi 467-8561 (JP)
(72) Inventor: ASAI, Yasuhiro, Nagoya-shi, Aichi 467-8562 (JP)
(74) Representative: J A Kemp LLP
(86) International application number: PCT/JP2022/034170
(87) International publication number: WO 2023/053932

(57) **Abstract**

Provided is a technology with which it is possible to minimize generation of excess current from a power source in the case when a scanning unit restarts after having come to a standstill due to reduction in power supply. In the present invention, when a first voltage detection circuit 95 detects, during machining operation using laser beams, that the output voltage from a galvano DC/DC converter 91 has fallen below a first threshold, a controller 6 executes: an action position acquisition process for acquiring a present action position of a galvano scanner 18 on the basis of vector data transmitted to an FPGA 6c from vector data conversion software 6b; a return vector data generation process for, on the basis of the present action position of the galvano scanner 18 thus acquired in the action position acquisition process, calculating return vector data which enables the galvano scanner 18 to return to a reference coordinate value and then causing the vector data conversion software 6b to generate said calculated return vector data; and a return command output process for receiving the return vector data generated from the vector data conversion software 6b in the return vector data generation process and outputting a command for causing the galvano scanner 18 to return to the reference coordinate value on the basis of the received return vector data.

## Description

### TECHNICAL FIELD

The present disclosure relates to a technique for laser processing an object.

### BACKGROUND ART

Patent Literature 1 discloses a laser processing apparatus configured to enable gap control for controlling a distance between a processing nozzle configured to irradiate a workpiece with a laser beam and a processing portion of the workpiece to a predetermined value until an abnormality in supply power is detected, and configured to disable the gap control in a case where the abnormality in supply power is detected.

### CITATION LIST

### PATENT LITERATURE

Patent Literature 1: JP2015-182105A

### SUMMARY OF INVENTION

### TECHNICAL PROBLEM

However, the laser processing apparatus described in Patent Literature 1 does not refer to a scanning unit configured to perform scanning with a laser beam in a case where the abnormality in supply power is detected, and cannot cope with a problem that may occur in a case where the scanning unit is stopped in a state in which a scanning position is unknown due to, for example, a rapid decrease in supply power. Specifically, in this case, after the scanning unit is stopped in the state in which the scanning position is unknown, in a case where the supply power returns to a normal state and the scanning unit is restarted, an overcurrent may occur from a power supply configured to supply power to the scanning unit depending on the scanning position at which the scanning unit is stopped before the restart.

An object of the present disclosure is to provide a technique capable of reducing occurrence of an overcurrent from a power supply in a case where a scanning unit is restarted after being stopped due to a decrease in supply power.

### SOLUTION TO PROBLEM

In order to achieve the above-described object, a laser processing apparatus according to the present disclosure is a laser processing apparatus includes a scanning unit configured to perform scanning with the laser beam, a voltage detector configured to detect whether an output voltage from the power supply is smaller than a predetermined threshold value, and a controller configured to control the laser oscillator and the scanning unit, based on the processing data. The controller includes a data generator configured to generate vector data used for a processing operation with the laser beam, based on the processing data, and a driver configured to receive the vector data generated and transmitted by the data generator and configured to output, to the scanning unit, an operation command for performing a scanning operation based on the received vector data. In a case where the voltage detector detects that the output voltage is smaller than a first threshold value, during the processing operation with the laser beam, the controller is configured to perform an operation position acquisition process of acquiring a current operation position of the scanning unit, based on the vector data transmitted from the data generator to the driver, a feedback vector data generation process of calculating feedback vector data for returning the scanning unit to a predetermined reference position, based on the current operation position of the scanning unit acquired in the operation position acquisition process, and of causing the data generator to generate the calculated feedback vector data, and a feedback command output process of receiving the feedback vector data generated by the data generator in the feedback vector data generation process, and of outputting a command for returning the scanning unit to the predetermined reference position, based on the received feedback vector data.

### ADVANTAGEOUS EFFECTS OF INVENTION

According to the present disclosure, it is possible to reduce occurrence of an overcurrent from the power supply in a case where the scanning unit is restarted after being stopped due to a decrease in supply power.

### BRIEF DESCRIPTION OF DRAWINGS

FIG. 1 is a diagram showing a schematic configuration of a laser processing apparatus according to an embodiment of the present disclosure.
FIG. 2 is a block diagram showing a control configuration of the laser processing apparatus in FIG. 1.
FIG. 3 is a diagram showing a generation sequence of various data.
FIG. 4 is a diagram showing flows of various signals in a laser processing unit in FIG. 1.
FIG. 5 is a flowchart showing a procedure of a control process to be executed by a controller, particularly a CPU.
FIG. 6 is a flowchart showing a continuation of the control process in FIG. 5.

### DESCRIPTION

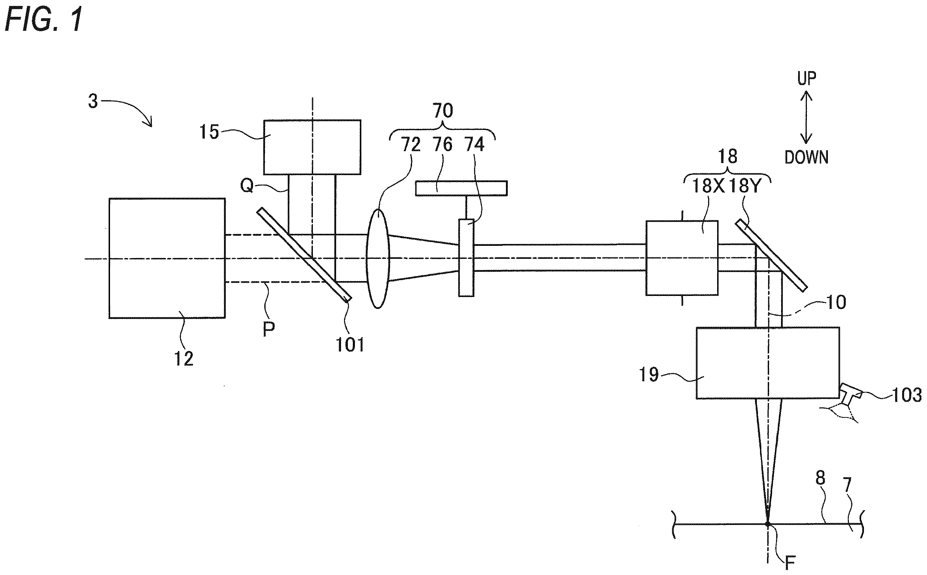

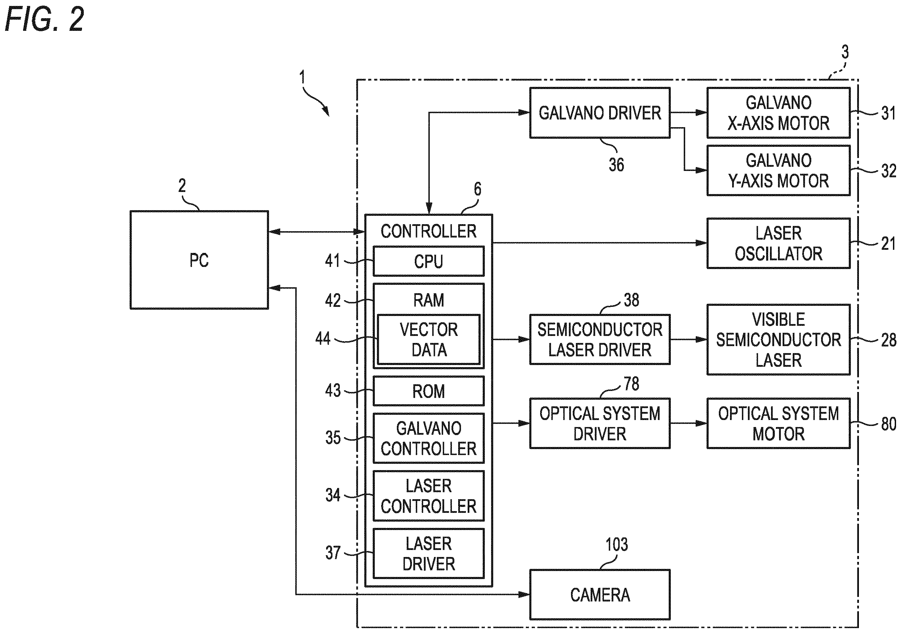

Hereinafter, an embodiment of the present disclosure will be described in detail with reference to the drawings. FIG. 1 shows a schematic configuration of a laser processing apparatus 1 according to an embodiment of the present disclosure, and FIG. 2 shows a control configuration of the laser processing apparatus 1. In FIGS. 1 and 2, a part of a basic configuration is omitted in the drawing, and dimensional ratios or the like of the drawn parts are not invariably accurate. In addition, in FIG. 1, an up-down direction is as shown in the figure.

As shown in FIG. 2, the laser processing apparatus 1 includes a PC 2 and a laser processing unit 3. Since the PC 2 is a general PC, the description of a configuration thereof is omitted.

The laser processing unit 3 is configured to perform marking (printing) processing by two-dimensionally scanning a surface 8 to be processed of an object 7 to be processed with a processing laser beam P. The laser processing unit 3 includes a controller 6.

The controller 6 is implemented by a computer, and is connected to the PC 2 via, for example, USB, Ethernet, wireless LAN, or RS-232C so as to be capable of two-way communication. The controller 6 is configured to drive and control the laser processing unit 3 based on printing information, parameters, various types of instruction information, and the like transmitted from the PC 2.

As shown in FIG. 1, the laser processing unit 3 includes a laser oscillation unit 12, a guide light portion 15, a dichroic mirror 101, an optical system 70, a camera 103, a galvano scanner 18, an fθ lens 19, and the like, and is covered with a substantially rectangular parallelepiped housing cover that is not shown.

The laser oscillation unit 12 includes a laser oscillator 21 or the like. The laser oscillator 21 includes a CO2 laser, a YAG laser, or the like, and emits the processing laser beam P. A diameter of the processing laser beam P is adjusted (for example, enlarged) by a beam expander that is not shown.

The guide light portion 15 includes a visible semiconductor laser 28 or the like. The visible semiconductor laser 28 is configured to emit guide light Q that is visible coherent light, for example, a red laser beam. The guide light Q is collimated by a lens group that is not shown, and further draws, by performing two-dimensional scanning, for example, an image of a print pattern to be subjected to marking (printing) processing with the processing laser beam P (hereinafter, referred to as an "object"), a rectangular image surrounding the object, or the like on the surface 8 of the object 7 as trajectories (residual time due to reflection). That is, the guide light Q has no marking (printing) processing capability.

A wavelength of the guide light Q is different from a wavelength of the processing laser beam P. In the present embodiment, for example, the wavelength of the processing laser beam P is 1064 nm, and the wavelength of the guide light Q is 650 nm.

Almost all of the incident processing laser beam P passes through the dichroic mirror 101. In addition, in the dichroic mirror 101, the guide light Q is incident at an incident angle of 45 degrees at a substantially central position of the dichroic mirror 101 through which the processing laser beam P passes, and is reflected on an optical path of the processing laser beam P at a reflection angle of 45 degrees. A reflectance of the dichroic mirror 101 has wavelength dependence. Specifically, the dichroic mirror 101 is surface-treated with a multilayer film structure of a dielectric layer and a metal layer, has a high reflectance with respect to the wavelength of the guide light Q, and allows almost (99%) light having a wavelength other than the wavelength of the guide light Q to pass therethrough.

An one-dot chain line in FIG. 1 indicates an optical axis 10 of the processing laser beam P and the guide light Q. In addition, a direction of the optical axis 10 indicates a path direction of the processing laser beam P and the guide light Q.

The optical system 70 includes a first lens 72, a second lens 74, and a moving mechanism 76. In the optical system 70, the processing laser beam P and the guide light Q, which pass through the dichroic mirror 101, are incident on and pass through the first lens 72. At this time, respective diameters of the processing laser beam P and the guide light Q are reduced by the first lens 72. In addition, the processing laser beam P and the guide light Q, which pass through the first lens 72, are incident on and pass through the second lens 74. At this time, the processing laser beam P and the guide light Q are collimated by the second lens 74. The moving mechanism 76 includes an optical system motor 80, a rack and pinion (not shown) configured to convert a rotational motion of the optical system motor 80 into a linear motion, and the like. The moving mechanism 76 is configured to move the second lens 74 in the path direction of the processing laser beam P and the guide light Q by rotation control of the optical system motor 80.

The moving mechanism 76 may be configured to move the first lens 72 instead of the second lens 74, or may be configured to move both the first lens 72 and the second lens 74 such that a distance between the first lens 72 and the second lens 74 changes.

The galvano scanner 18 is configured to perform two-dimensional scanning with the processing laser beam P and the guide light Q that pass through the optical system 70. In the galvano scanner 18, a galvano X-axis motor 31 and a galvano Y-axis motor 32 are attached such that respective motor shafts are orthogonal to each other, and scanning mirrors 18X and 18Y, attached to ends of the respective motor shafts, face each other inside. By rotating the scanning mirrors 18X and 18Y by rotation control of the motors 31 and 32, the two-dimensional scanning is performed with the processing laser beam P and the guide light Q. Two-dimensional scanning directions are an X direction and a Y direction. A reference position, which is an initial position (angle) of each of the scanning mirrors 18X and 18Y at which a scanning operation is started, is set in the galvano scanner 18, at the time of starting a laser processing operation or at the time of turning on a power supply of the laser processing apparatus 1. The reference position is indicated by a reference coordinate value in a coordinate signal, and in a case where the galvano scanner 18 takes the reference coordinate value, no excessive load is applied to each of the motors 31 and 32, and a stable scanning operation can be started. In general, the reference coordinate value is often set to an origin (0, 0) in an XY coordinate system of a laser irradiation region, and the reference coordinate value is also set to the origin in the present embodiment.

The fθ lens 19 is configured to condense the processing laser beam P and the guide light Q with which the galvano scanner 18 two-dimensionally scans the surface 8 of the object 7. Therefore, the surface 8 of the object 7 is two-dimensionally scanned with the processing laser beam P and the guide light Q in the X direction and the Y direction by the rotation control of the motors 31 and 32.

The processing laser beam P and the guide light Q have different wavelengths. Therefore, in a case where the distance between the first lens 72 and the second lens 74 in the optical system 70 is constant, positions at which the processing laser beam P and the guide light Q are condensed (hereinafter referred to as "focal positions F") are different in the up-down direction. Therefore, the focal positions F of the processing laser beam P and the guide light Q are aligned on the surface 8 of the object 7, by adjusting the distance between the first lens 72 and the second lens 74 in the optical system 70.

In addition, even in a case where the positions of the surface 8 of the object 7 is changed in the up-down direction, similarly, the focal positions F of the processing laser beam P and the guide light Q are aligned on the surface 8 of the object 7, by adjusting the distance between the first lens 72 and the second lens 74 in the optical system 70.

The camera 103 is provided near the fθ lens 19 while facing the surface 8 of the object 7. Accordingly, the camera 103 may be configured to capture, for example, an image of the guide light Q emitted to the surface 8 of the object 7 and to display the image of the guide light Q on a liquid crystal display (LCD) 56 to be described later, such that a user may confirm whether the alignment between a processing image and the object 7 is appropriate.

Next, a control configuration of the laser processing unit 3 included in the laser processing apparatus 1 will be described with reference to FIG. 2.

As shown in FIG. 2, the laser processing unit 3 includes the controller 6, a galvano driver 36, a laser driver 37, a semiconductor laser driver 38, an optical system driver 78, and the camera 103. The controller 6 is configured to control the entire laser processing unit 3. The controller 6 is electrically connected to the galvano driver 36, the laser driver 37, the semiconductor laser driver 38, the optical system driver 78, and the like. In addition, the external PC 2 is connected to the controller 6 and the camera 103 so as to be capable of two-way communication. The controller 6 is configured to receive information (for example, the printing information, the parameters for the laser processing unit 3, and various types of instruction information from the user) transmitted from the PC 2. The camera 103 is configured to receive information (for example, imaging instruction information) transmitted from the PC 2, and configured to transmit a captured image to the PC 2.

The controller 6 includes a CPU 41, a RAM 42, a ROM 43, a galvano controller 35, a laser controller 34, the laser driver 37, and the like. The CPU 41 is an arithmetic device and a control device for controlling the entire laser processing unit 3. The CPU 41, the RAM 42, the ROM 43, and the like are connected to one another via a bus (not shown) to exchange data with one another.

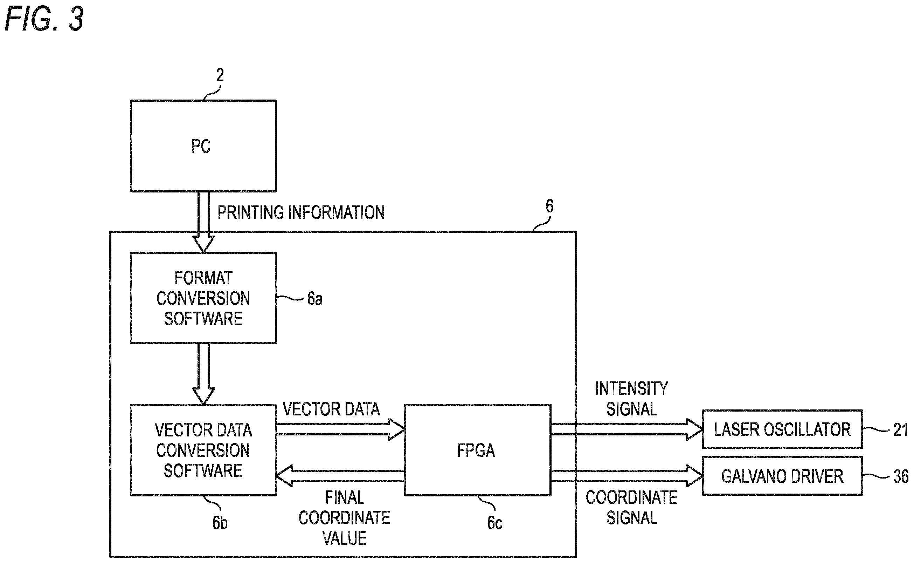

The RAM 42 is configured to temporarily store various arithmetic results calculated by the CPU 41, vector data 44 to be described later with reference to FIG. 3, and the like.

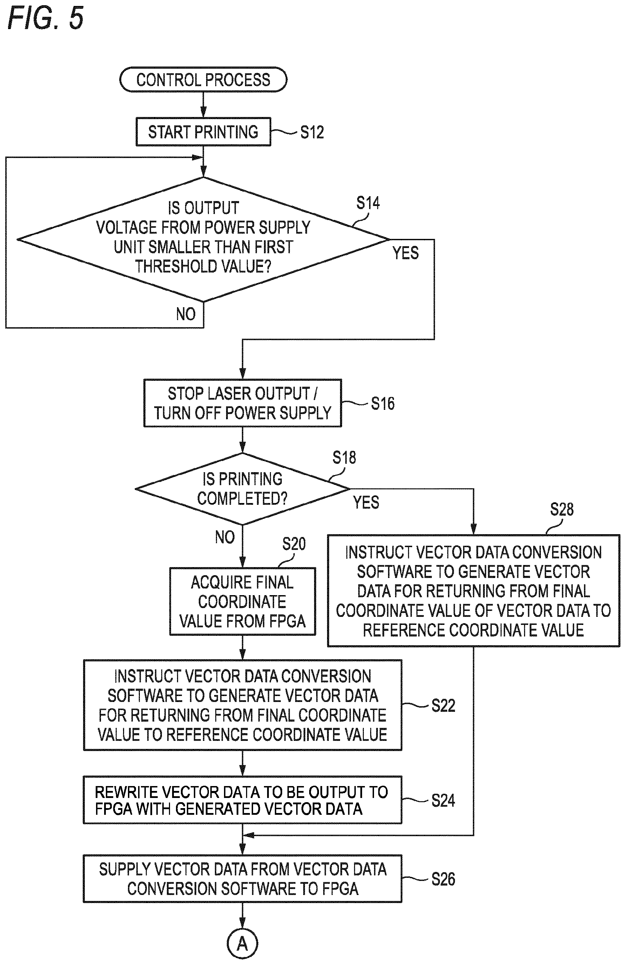

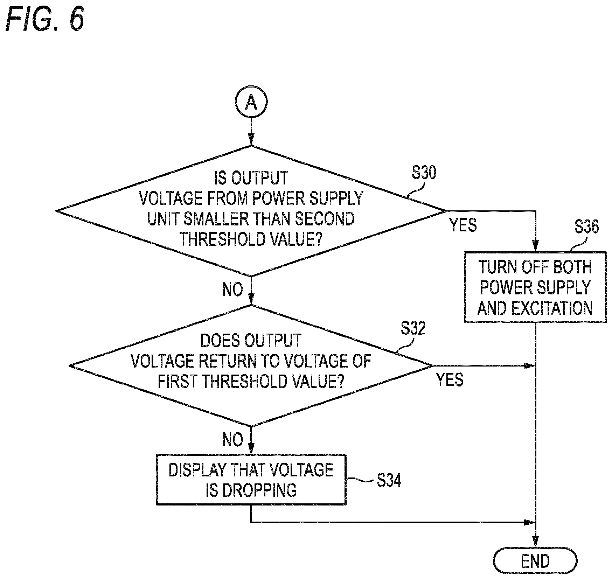

The ROM 43 is configured to store various programs, for example, a program of format conversion software 6a, a program of vector data conversion software 6b to be described later with reference to FIG. 3, and a program of a control process to be described later with reference to FIGS. 5 and 6.

The CPU 41 is configured to perform various calculations and controls based on the programs stored in the ROM 43.

The optical system driver 78 is configured to drive and control the optical system motor 80 based on the information received from the controller 6 to move the second lens 74.

FIG. 3 shows a generation sequence of various data. The PC 2 is configured to transmit the printing information to the controller 6, in accordance with an instruction from the user. The printing information is information indicating characters and figures to be printed. Upon receiving the printing information, the CPU 41 of the controller 6 is configured to activate the format conversion software 6a stored in the ROM 43 as described above, and to convert the printing information into a language recognizable by the controller 6 based on the format conversion software 6a. The character information after format conversion is transferred to the vector data conversion software 6b. The vector data conversion software 6b is also stored in the ROM 43 as described above, and the CPU 41 is configured to convert the converted character information into vector data based on the vector data conversion software 6b. The vector data is data used in a case where the laser processing unit 3 performs a printing processing with the processing laser beam P. The converted vector data is supplied to an FPGA 6c. The FPGA is an abbreviation of "Field-Programmable Gate Array". The FPGA 6c is configured to generate an intensity signal indicating an output intensity of the laser oscillator 21, based on the supplied vector data and supplies the intensity signal to the laser oscillator 21, is configured to generate a coordinate signal indicating scanning coordinates of the processing laser beam P, and is configured to supply the coordinate signal to the galvano driver 36. In the present embodiment, the intensity signal is a PWM signal, and the coordinate signal is an analog signal. As described above, the FPGA 6c serves as the galvano controller 35, the laser controller 34, and the laser driver 37.

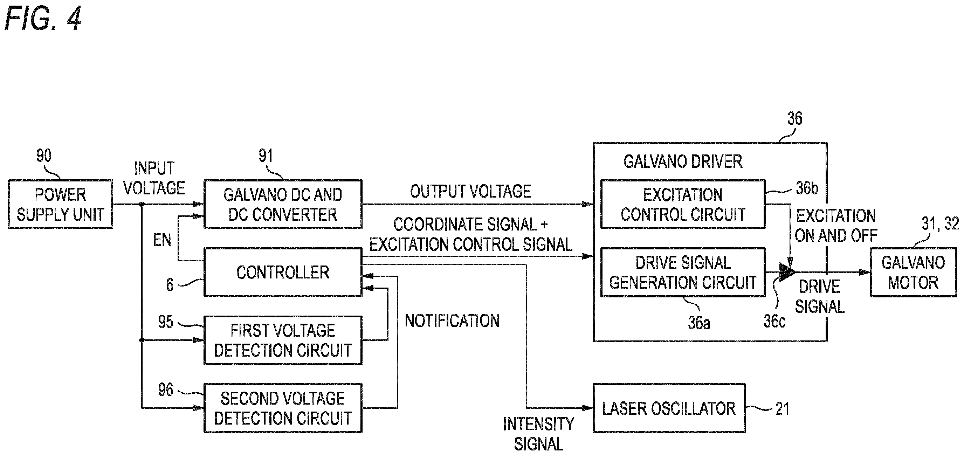

FIG. 4 shows flows of various signals in the laser processing unit 3. A power supply unit 90 is configured to supply, for example, a power supply voltage of 48V to the inside of the laser processing unit 3, specifically, to the laser oscillator 21 or a galvano DC-DC converter 91. The galvano DC-DC converter 91 is configured to convert the power supply voltage of 48V from the power supply unit 90 into, for example, a power supply voltage of 15V, and is configured to supply the converted power supply voltage of 15V to the galvano driver 36 and the galvano motors 31 and 32. A DC-DC converter or the like configured to receive power supply from the power supply unit 48 and is configured to convert a power supply voltage to a power supply voltage suitable for the semiconductor driver 38 or the optical system driver 78 is also separately provided, but illustration and detailed description thereof are omitted.

An output voltage from the power supply unit 90 is input to a first voltage detection circuit 95 and a second voltage detection circuit 96. The first voltage detection circuit 95 is configured to output a notification signal to the controller 6 while the output voltage of the power supply unit 90 is smaller than a first threshold value, for example, 20V. On the other hand, the second voltage detection circuit 96 is configured to output a notification signal to the controller 6 while the output voltage of the power supply unit 90 is smaller than a second threshold value, for example, 16V.

The controller 6 is configured to output, to the galvano DC-DC converter 91, an enable signal (hereinafter, referred to as an "EN signal") for operating the galvano DC-DC converter 91. In addition, the controller 6 is configured to output a coordinate signal and an excitation control signal to the galvano driver 36, and is configured to output an intensity signal to the laser driver 37.

The galvano driver 36 includes a drive signal generation circuit 36a, an excitation control circuit 36b, and a transistor circuit 36c. The drive signal generation circuit 36a is configured to generate drive signals for driving the galvano X-axis motor 31 and the galvano Y-axis motor 32, based on the coordinate signal supplied from the controller 6. On the other hand, the excitation control circuit 36b is configured to perform excitation control based on the excitation control signal supplied from the controller 6. The drive signals generated by the drive signal generation circuit 36a are input to an input side of the transistor circuit 36c, and an excitation ON and OFF signal from the excitation control circuit 36b is input to a control input of the transistor circuit 36c. The transistor circuit 36c is configured to output the input drive signals as it is to the galvano X-axis motor 31 and the galvano Y-axis motor 32 in a case where an excitation ON signal is input, and is configured to stop the output of the input drive signals in a case where an excitation OFF signal is input. Although not shown, a circuit configuring the controller 6, the galvano DC-DC converter 91, or the galvano driver 36 is provided with a bypass capacitor having a corresponding static capacitance. Therefore, even in a case where the power supply to the circuit is interrupted for some reason (for example, instantaneous power failure), a voltage in the circuit does not immediately become zero, and the bypass capacitor serves as a backup power supply, and the voltage can be gradually reduced along with the power consumption while maintaining the voltage for a certain period of time.

The control process to be executed by the laser processing apparatus 1 as described above will be described in detail with reference to FIGS. 5 and 6. FIGS. 5 and 6 show a procedure of the control process performed by the controller 6, particularly the CPU 41. The control process is started, for example, in a case where the laser processing apparatus 1 is instructed to start printing. Hereinafter, in the description of the procedure of the control process, a step is denoted as "S".

In FIG. 5, first, the CPU 41 starts printing (step S12). Next, the CPU 41 determines whether the first voltage detection circuit 95 detects that the output voltage from the power supply unit 90 is smaller than the first threshold value (step S14). The determination is made by determining whether the first voltage detection circuit 95 outputs the notification signal. When the first voltage detection circuit 95 does not detect that the output voltage from the power supply unit 90 is smaller than the first threshold value (step S14: NO), the CPU 41 waits until the first voltage detection circuit 95 detects that the output voltage from the power supply unit 90 is smaller than the first threshold value, and when that the first voltage detection circuit 95 detects that the output voltage from the power supply unit 90 is smaller than the first threshold value (step S14: YES), the CPU 41 advances the process to step S16.

In step S 16, when the laser oscillator 21 is outputting, the CPU 41 stops laser output of the laser oscillator 21. Specifically, the CPU 41 transfers data for generating vector data in which the intensity signal becomes "0" from the vector data conversion software 6b to the vector data conversion software 6b. In a case where the laser output of the laser oscillator 21 is stopped or is in a stopped state, the power supply from the power supply unit 90 to the laser oscillator 21 is further stopped.

Next, the CPU 41 determines whether printing is completed (step S18). When the printing is not completed (step S18: NO), the CPU 41 acquires a final coordinate value from the FPGA 6c (step S20). The final coordinate value is a coordinate value of the coordinate signal output by the FPGA 6c in a case where the laser output is stopped in step S16.

Next, the CPU 41 transfers, to the vector data conversion software 6b, the acquired final coordinate value and the reference coordinate value to be returned, and instructs the vector data conversion software 6b to generate vector data for returning from the final coordinate value to the reference coordinate value (step S22). At this time, it is preferred to instruct the vector data conversion software 6b to generate vector data for returning at the highest speed. In addition, it is preferred to instruct the vector data conversion software 6b to generate vector data for returning to the reference coordinate value at a higher speed as a distance between the final coordinate value and the reference coordinate value is longer. This is intended to operate the galvano X-axis motor 31 and the galvano Y-axis motor 32 while voltages for driving the galvano X-axis motor 31 and the galvano Y-axis motor 32 can be maintained by the bypass capacitor provided in the circuit included in the galvano DC-DC converter 91 or the galvano driver 36.

Next, the CPU 41 then rewrites the vector data prepared to be output to the FPGA 6c with the vector data generated by the vector data conversion software 6b in response to the instruction in step S22 (step S24).

Next, the CPU 41 supplies the vector data from the vector data conversion software 6b to the FPGA 6c (step S26). When the process proceeds from step S24 to step S26, the vector data for returning from the final coordinate value to the reference coordinate value is supplied to the FPGA 6c, and the galvano driver 36 generates drive signals for returning the galvano scanner 18 to its reference position, and supplies the drive signals to the galvano X-axis motor 31 and the galvano Y-axis motor 32.

On the other hand, when the printing is completed (step S18: YES), the CPU 41 transfers the final coordinates of the vector data and the reference coordinate value to be returned to the vector data conversion software 6b, and instructs the vector data conversion software 6b to generate the vector data for returning from the final coordinates to the reference coordinate value (step S28). A difference between the processing of step S28 and the processing of step S22 is that in the processing of step S28, since the printing is completed, final coordinates can be known in the vector data conversion software 6b without querying the FPGA 6c, and the FPGA 6c is not queried for the final coordinate value, whereas in the processing of S22, since the printing is not completed, no final coordinate cannot be known in the vector data conversion software 6b, and thus the FPGA 6c is queried for a final coordinate value.

After the processing of step S28, the CPU 41 advances the processing to step S26. This is because there is no vector data prepared to be output to the FPGA 6c next, and thus the CPU 41 does not need to perform the processing of step S24. Similar to when the processing proceeds from step S24 to step S26, when the processing proceeds from step S28 to step S26, the vector data for returning from the final coordinates to the reference coordinate value is supplied to the FPGA 6c, and thus the galvano driver 36 generates the drive signals for returning the galvano scanner 18 to the reference position, and supplies the drive signals to the galvano X-axis motor 31 and the galvano Y-axis motor 32.

Next, the CPU 41 determines whether the second voltage detection circuit 96 detects that the output voltage from the power supply unit 90 is smaller than the second threshold value (step S30 in FIG. 6). The determination is made by determining whether the second voltage detection circuit 96 outputs the notification signal. When the second voltage detection circuit 96 does not detect that the output voltage from the power supply unit 90 is smaller than the second threshold value (step S30: NO), the CPU 41 determines whether the output voltage from the power supply unit 90 returns to a voltage of the first threshold value (step S32). The determination is made by determining whether the first voltage detection circuit 95 stops outputting the notification signal. When the output voltage does not return to the voltage of the first threshold value (step S32: NO), the CPU 41 instructs the PC 2 to display, on a display (not shown) of the PC 2, a message indicating that the voltage is dropping (step S34), and then ends the control process. On the other hand, when the output voltage returns to the voltage of the first threshold value (step S32: YES), the CPU 41 ends the control process.

On the other hand, when the second voltage detection circuit 96 detects that the output voltage from the power supply unit 90 is smaller than the second threshold value (step S30: YES), the CPU 41 turns off a power supply of the galvano driver 36, turns off the excitation of the galvano X-axis motor 31 and the galvano Y-axis motor 32 (step S36), and then ends the control process. In the processing of step S36, turning off the power supply of the galvano driver 36 specifically means that the controller 6 switches the EN signal output to the galvano DC-DC converter 91 to a disable signal. In addition, turning off the excitation of the galvano X-axis motor 31 and the galvano Y-axis motor 32 specifically means switching the excitation control signal, which is output from the controller 6 to the galvano driver 36, to a signal that causes the galvano driver 36 to output excitation off.

As described above, the laser processing apparatus 1 of the present embodiment is configured to irradiate a workpiece with a laser beam to process the workpiece, and includes the laser oscillator 21 configured to generate the laser beam, the galvano scanner 18 configured to perform scanning with the laser beam from the laser oscillator 21, the power supply unit 90 configured to supply power to parts of the laser processing unit 3, such as the laser oscillator 21 and the galvano DC-DC converter 91, the first voltage detection circuit 95 configured to detect whether an output voltage from the power supply unit 90 is smaller than a predetermined threshold value, the controller 6 configured to receive input of processing data indicating a processing content of the workpiece, and the controller 6 configured to control the laser oscillator 21 and the galvano scanner 18 based on the processing data.

The controller 6 includes the vector data conversion software 6b configured to generate vector data used for a processing operation with the laser beam based on the processing data received by the controller 6, and the FPGA 6c configured to receive the vector data generated and transmitted by the vector data conversion software 6b and to output, to the galvano scanner 18, an operation command for performing a scanning operation based on the received vector data.

In a case where the first voltage detection circuit 95 detects that the output voltage from the power supply unit 90 is smaller than the first threshold value during the processing operation with the laser beam, the controller 6 is configured to execute: an operation position acquisition process of acquiring the final coordinate value of the galvano scanner 18 based on the vector data transmitted by the vector data conversion software 6b to the FPGA 6c (step S20); a feedback vector data generation process of calculating feedback vector data for returning the galvano scanner 18 to the reference coordinate value based on the final coordinate value of the galvano scanner 18 acquired in the operation position acquisition process and causing the vector data conversion software 6b to generate the calculated feedback vector data (step S22); and a feedback command output process of receiving the feedback vector data generated by the vector data conversion software 6b in the feedback vector data generation process and outputting a command for returning the galvano scanner 18 to the reference coordinate value based on the received feedback vector data (step S26).

As described above, in the laser processing apparatus 1 of the present embodiment, when it is detected that the output voltage from the power supply unit 90 is smaller than the first threshold value during the processing operation with the laser beam, the final coordinate value of the galvano scanner 18 is acquired based on the vector data transmitted from the vector data conversion software 6b to the FPGA 6c, the feedback vector data for returning the galvano scanner 18 to the reference coordinate value is calculated based on the acquired final coordinate value of the galvano scanner 18, the calculated feedback vector data is generated by the vector data conversion software 6b, the feedback vector data generated by the vector data conversion software 6b is received, and the command for returning the galvano scanner 18 to the reference coordinate value is output based on the received feedback vector data, and thus occurrence of an overcurrent from the power supply can be reduced when the galvano scanner 18 is restarted after being stopped due to a decrease in supply power.

In the present embodiment, the galvano scanner 18 is an example of a "scanning unit". The power supply unit 90 is an example of a "power supply". The first voltage detection circuit 95 is an example of a "voltage detection unit". The controller 6 is an example of an "input unit" and a "control unit". The vector data conversion software 6b is an example of a "data generation unit". The FPGA 6c is an example of a "driver". The final coordinate value is an example of a "current operation position". The reference coordinate value is an example of a "predetermined reference position".

In a case where the first voltage detection circuit 95 detects that the output voltage from the power supply unit 90 is smaller than the first threshold value during the processing operation with the laser beam, the controller 6 executes a stop process of stopping the laser output of the laser oscillator 21. Accordingly, when the laser oscillator 21 is restarted after being stopped due to the decrease in supply power, there is no possibility of emitting the laser beam against an intention of the user, thereby improving safety.

In addition, in a case where the second voltage detection circuit 96 detects that the output voltage from the power supply unit 90 is smaller than the second threshold value, which is smaller than the first threshold value during the processing operation with the laser beam, the controller 6 executes a power supply-off process of turning off the power supply unit 90 after disconnecting electrical connection to the galvano scanner 18. Accordingly, a time margin is secured from when the command for returning the galvano scanner 18 to the reference coordinate value is output until the power supply is turned off, and thus the galvano scanner 18 can be reliably returned to the reference coordinate value. The second voltage detection circuit 96 is an example of a "voltage detection unit".

In addition, in the feedback vector data generation process, the feedback vector data is calculated. The feedback date is to be used to cause the galvano scanner 18 to return to the predetermined reference position at a higher operation speed as a distance between the current operation position of the galvano scanner 18 acquired in the operation position acquisition process and the predetermined reference position is longer. The calculated feedback vector data is generated by the vector data conversion software 6b. This enables the galvano scanner 18 to return to the reference coordinate value more reliably.

The present disclosure is not limited to the above-described embodiment, and various modifications can be made without departing from the gist of the present disclosure.
(1) In the above-described embodiment, the first threshold value and the second threshold value of the power supply voltage are detected by separate voltage detection circuits, and the present disclosure is not limited thereto, and the first threshold value and the second threshold value may be detected by one voltage detection circuit. The first threshold value and the second threshold value are fixed values, but may be changed by setting.
(2) In the above-described embodiment, the laser output is stopped and the power supply to the laser oscillator 21 is turned off at a timing when the first voltage detection circuit 95 detects that the output voltage from the power supply unit 90 is smaller than the first threshold value (step S16), and the present disclosure is not limited thereto. The laser output may be stopped and the power supply to the laser oscillator 21 may be turned off at a timing when a third voltage detection circuit, which is newly provided, detects that the output voltage is smaller than a third threshold value different from the first threshold value. Alternatively, the operation may be controlled based on a determination criterion other than the output voltage from the power supply unit 90.

### REFERENCE SIGNS LIST

1: laser processing apparatus, 2: PC, 6: controller, 6a: format conversion software, 6b: vector data conversion software, 6c: FPGA, 18: galvano scanner, 21: laser oscillator, 31: galvano X-axis motor, 32: galvano Y-axis motor, 36: galvano driver, 36a: drive signal generation circuit, 36b: excitation control circuit, 37: laser driver, 41: CPU, 90: power supply unit, 91: galvano DC-DC converter, 95: first voltage detection circuit, 96: second voltage detection circuit

## Claims

1. A laser processing apparatus for irradiating a workpiece with a laser beam to process the workpiece, the laser processing apparatus comprising:
a laser oscillator configured to generate the laser beam;
a scanning unit configured to perform scanning with the laser beam from the laser oscillator;
a power supply configured to supply power to the laser oscillator and the scanning unit;
a voltage detection unit configured to detect whether an output voltage from the power supply is smaller than a predetermined threshold value;
an input unit configured to receive input of processing data indicating a processing content of the workpiece; and
a control unit configured to control the laser oscillator and the scanning unit, based on the processing data,
wherein the control unit includes:
a data generation unit configured to generate vector data to be used for a processing operation with the laser beam, based on the processing data received from the input unit; and
a driver configured to receive the vector data generated and transmitted by the data generation unit and configured to output, to the scanning unit, an operation command for performing a scanning operation based on the received vector data, and
in a case where the voltage detection unit detects that the output voltage from the power supply is smaller than a first threshold value, during the processing operation with the laser beam, the control unit is configured to perform:
an operation position acquisition process of acquiring a current operation position of the scanning unit, based on the vector data transmitted from the data generation unit to the driver,
a feedback vector data generation process of calculating feedback vector data for returning the scanning unit to a predetermined reference position, based on the current operation position of the scanning unit acquired in the operation position acquisition process, and of causing the data generation unit to generate the calculated feedback vector data, and
a feedback command output process of receiving the feedback vector data generated by the data generation unit in the feedback vector data generation process, and of outputting a command for returning the scanning unit to the predetermined reference position, based on the received feedback vector data.

2. The laser processing apparatus according to claim 1,
wherein in a case where the voltage detection unit detects that the output voltage from the power supply is smaller than the first threshold value, during the processing operation with the laser beam, the control unit is configured to perform a stop process of stopping laser output of the laser oscillator.

3. The laser processing apparatus according to claim 1 or 2,
wherein in a case where, during the processing operation with the laser beam, the voltage detection unit detects that the output voltage from the power supply is smaller than a second threshold value smaller than the first threshold value, the control unit is configured to perform a power supply-off process of turning off the power supply after disconnecting electrical connection to the scanning unit.

4. The laser processing apparatus according to any one of claims 1 to 3,
wherein the scanning unit includes a galvano motor including a mirror.

5. The laser processing apparatus according to any one of claims 1 to 4,
wherein in the feedback vector data generation process, feedback vector data is to be calculated, and the calculated feedback vector data is to be generated from the data generation unit, the feedback vector fata being to be used to cause the scanner to return to the predetermined reference position at a higher operation speed as a distance between the current operation position of the scanner acquired in the operation position acquisition process and the predetermined reference position is longer.

6. A laser processing method using a laser processing apparatus, the laser processing apparatus for irradiating a workpiece with a laser beam to process a workpiece, the laser processing apparatus including: a laser oscillator configured to generate the laser beam; a scanning unit configured to perform scanning with the laser beam from the laser oscillator; a power supply configured to supply power to the laser oscillator and the scanning unit; a voltage detection unit configured to detect whether an output voltage from the power supply is smaller than a predetermined threshold value; and an input unit configured to receive input of processing data indicating a processing content of the workpiece with the laser beam, the method comprising:
in a case where the voltage detection unit detects that the output voltage from the power supply is smaller than a first threshold value, during the processing operation with the laser beam, an operation position acquisition processing of receiving vector data generated and transmitted by a data generation unit, and of acquiring a current operation position of the scanning unit based on the vector data transmitted to a driver configured to output, to the scanning unit, an operation command for performing a scanning operation based on the received vector data, the data generator being configured to generate vector data used for processing operation with the laser beam based on the processing data received by the input unit;
a feedback vector data generation processing of calculating feedback vector data for returning the scanning unit to a predetermined reference position based on the current operation position of the scanning unit acquired in the operation position acquisition processing, and of causing the data generation unit to generate the calculated feedback vector data, and
a feedback command output processing of receiving the feedback vector data generated by the data generation unit in the feedback vector data generation processing, and of outputting a command for returning the scanning unit to the predetermined reference position, based on the received feedback vector data.
